# EUROPÄISCHE PATENTSCHRIFT

(11) **EP 1 365 313 B1**
(45) Veröffentlichungstag und Bekanntmachung des Hinweises auf die Patenterteilung: **17.10.2007**
(21) Anmeldenummer: 02011297.5
(22) Anmeldetag: 22.05.2002
(51) Int. Cl.: G06F 3/02

(54) **Tastatur mit mindestens einer Abstützvorrichtung**
Keyboard having at least one support device
Clavier ayant au moins un dispositif de support

(43) Veröffentlichungstag der Anmeldung: 26.11.2003
(73) Patentinhaber: Tektronix Berlin GmbH & Co. KG, 13629 Berlin (DE)
(72) Erfinder: Klimke, Jens, 14612 Falkensee (DE); Merz, Rudolf, 13589 Berlin (DE)
(74) Vertreter: Schurack, Eduard F.

(56) Entgegenhaltungen:
- EP-A- 0 360 384
- US-A- 5 975 780
- US-A- 6 144 551

## Beschreibung

Die vorliegende Erfindung betrifft eine Tastatur mit mindestens einer Abstützvorrichtung, wobei die Abstützvorrichtung schwenkbar mit dem Gehäuse der Tastatur verbunden ist, wobei das Gehäuse der Tastatur eine Ober- und eine Unterseite aufweist.

Derartige Tastaturen sind bekannt und werden beispielsweise als Eingabevorrichtung für Computer und andere Informationsverarbeitungsgeräte verwendet.

Tastaturen von dieser Art werden häufiger auch im Zusammenhang mit tragbaren Informationsverarbeitungsgeräten verwendet, wobei die Tastatur zum Transport an dem Informationsverarbeitungsgerät befestigt werden kann. Für einen Arbeitsmodus kann die Tastatur dann abgenommen werden und ist lediglich über ein Kabel mit dem Informationsverarbeitungsgerät verbunden. Damit lässt sie sich relativ bequem zum Informationsverarbeitungsgerät justieren und kann in eine von einer Bedienperson gewünschte Position gebracht werden.

Bei bekannten Tastaturen sind Abstützvorrichtungen, um die Tastatur an ihrer Rückseite für eine bequemere Eingabe durch eine Bedienperson anzuheben, an der Rückseite der Tastatur angebracht, von wo sie nur noch aufgeklappt werden müssen. Hierbei besteht jedoch die Gefahr, dass diese Abstützvorrichtungen versehentlich während des Transports des Informationsverarbeitungsgeräts mit daran befestigter Tastatur ausklappen und dadurch die Abstützvorrichtungen beschädigt werden. Außerdem wird das ästhetische Erscheinungsbild des Informationsverarbeitungsgeräts von der im Transportmodus daran befestigten Tastatur mitbestimmt. Die Anbringung von Abstützvorrichtungen an der Rückseite der Tastatur wirkt jedoch optisch wenig ansprechend, da sie das homogene Erscheinungsbild stört.

Aus der EP 0 360 384 A2 ist ein elektronisches Gerät mit einer beweglichen Tastatur bekannt, bei dem zu beiden Seiten hinten an der Tastatur ein nach unten ausklappbarer Fuß angebracht ist. Der Fuß ist bei zusammengeklapptem Gerät von der Gerätewand her zugänglich.

Aus dem US-Patent 6,144,551 ist eine Tastatur mit einer Abstützvorrichtung bekannt, die nach Art eines Deckels auf der Oberseite der Tastatur aufliegt und um einen Winkel gedreht werden kann, um die Tastatur abzustützen.

Die Aufgabe der vorliegenden Erfindung besteht deshalb darin, eine gattungsgemäße Tastatur derart weiterzubilden, dass die Gefahr einer Beschädigung der Abstützvorrichtungen während des Transports reduziert ist.

Diese Aufgabe wird erfindungsgemäß gelöst durch eine Tastatur mit den Merkmalen von Patentanspruch 1.

Der Erfindung liegt die Erkenntnis zugrunde, dass diese Aufgabe gelöst werden kann, wenn die Abstützvorrichtungen an der Oberseite der Tastatur angeordnet sind, von wo aus sie auf die Unterseite infolge einer geschickten Konstruktion ausgeklappt werden können. Dadurch sind die Abstützvorrichtungen während des Transports geschützt und stören auch nicht das Erscheinungsbild der Unterseite, die beim Transport eines Informationsverarbeitungsgeräts mit einer derartigen Tastatur zu sehen ist.

Bei einer bevorzugten Ausführungsform ist die Abstützvorrichtung derart mit Bezug auf die Tastatur angeordnet, dass sie um die Hinterseite und/oder, linke und/oder rechte Seite der Tastatur rotiert werden kann. Dies ermöglicht, dass je nach Auslegung der Tastatur, beispielsweise hinsichtlich Breite und Höhe, unterschiedliche Orte bevorzugt sein können, um dort die Abstützvorrichtungen anzuordnen.

Bevorzugt weist die Abstützvorrichtung eine Aussparung auf, die derart ausgebildet ist, dass sie im aufgeklappten Zustand der Abstützvorrichtung den Teil der Unterseite der Tastatur aufnehmen kann, an dem sich die Abstützvorrichtung abstützt. Durch diese Maßnahme brauchen an der Unterseite der Tastatur keine Aussparungen, Öffnungen und dergleichen vorgesehen sein, um ein Klappen der Abstützvorrichtung zur Unterseite der Tastatur zu ermöglichen. Dadurch kann erreicht werden, dass die Unterseite der Tastatur keinen Hinweis gibt, dass an der korrespondierenden Stelle der Oberseite die Abstützvorrichtung untergebracht ist. Ein perfektes Erscheinungsbild der Unterseite der Tastatur ist die Folge.

Bevorzugt weist die Kontur der Aussparung einen bogenförmigen Bereich auf sowie einen geradlinigen Bereich, an dem sich die Abstützvorrichtung im aufgeklappten Zustand an der Unterseite der Tastatur abstützt. Der bogenförmige Bereich erlaubt während des Aufklappens ein Gleiten der Abstützvorrichtung über die obere Seite der Unterseite der Tastatur, so dass die Abstützvorrichtung mit maximaler Größe und damit zur Gewährleistung maximaler Stabilität ausgebildet werden kann. Der geradlinige Bereich der Aussparung erlaubt ein planes Aufliegen der Unterseite der Tastatur auf diesen Bereich, was in einem sicheren Abstützen der Tastatur resultiert.

Bevorzugt weist die Kontur der Aussparung einen Bereich auf, der schlitzförmig im Wesentlichen in Materialstärke der Unterseite der Tastatur ausgebildet ist, um den Bereich der Unterseite der Tastatur zu klemmen, an dem sich die Abstützvorrichtung im aufgeklappten Zustand abstützt. Diese Variante erlaubt nicht nur ein sicheres Aufliegen der Unterseite der Tastatur auf der Abstützvorrichtung, sondern unterstützt durch Klemmen der Unterseite der Tastatur den sicheren Halt der Abstützvorrichtung im aufgeklappten Zustand.

Dadurch, dass vorgesehen werden kann, dass die Abstützvorrichtung derart angeordnet ist, dass sie mehr als 270 Grad rotiert werden kann, lässt sich eine Selbstsperrung erzielen, die ermöglicht, dass bei Druck auf die Tastatur die Abstützvorrichtung nicht versehentlich hochklappt.

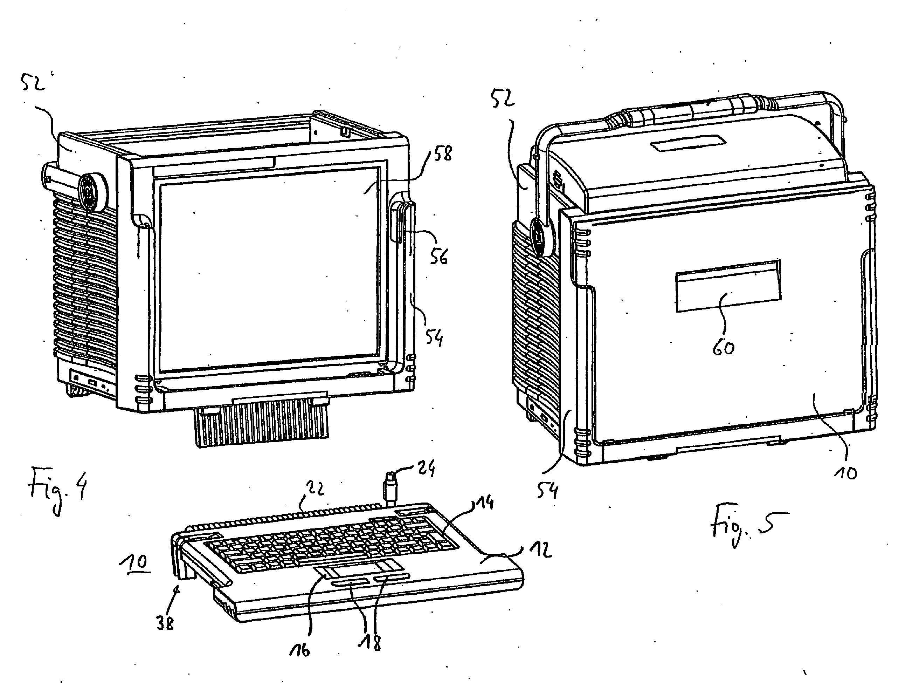

Die Abstützvorrichtung ist bevorzugt derart ausgebildet und schwenkbar gelagert, dass sie in eingeklapptem Zustand der Abstützvorrichtung nicht über die Seite hinausragt, um die sie rotiert. Dadurch wird sichergestellt, dass die Tastatur in einfacher Weise zur Halterung während des Transports, siehe hierzu die Beschreibung zu den Figuren 4 und 5, in seitliche Führungen eingeschoben werden kann.

Bevorzugt sind mindestens zwei Abstützvorrichtungen zur Bildung eines Abstützfußes über ein Verbindungselement zusammengefasst. Damit lässt sich eine stabilere Abstützung der Tastatur erreichen, selbst bei geringer Materialstärke und damit geringem Gewicht einer Abstützvorrichtung.

Bevorzugt ist das Verbindungselement so ausgebildet, dass es im eingeklappten Zustand des Abstützfußes als Ausklappgriff für den Abstützfuß verwendbar ist. Damit braucht kein weiterer Ausklappgriff für den Abstützfuß vorgesehen werden.

Für eine besonders einfache Montage ist bevorzugt, dass der zwischen den beiden Abstützvorrichtungen eines Abstützfußes im einklappten Zustand befindliche Teil der Gehäuseoberseite der Tastatur als separates Gehäuseelement ausgeführt ist. Damit kann beim Montieren der Tastatur zunächst der Abstützfuß mit der Tastatur verbunden werden, anschließend, beispielsweise durch geeignete Ausbildung auch zur zusätzlichen Sicherung, das separate Gehäuseelement. Bevorzugt ist vorgesehen, daß der Abstützfuß durch das separate Gehäuseelement gehalten wird. Spezielle Haltevorrichtungen für den Abstützfuß können damit völlig entfallen.

Bevorzugt weist das separate Gehäuseelement weiterhin eine Vertiefung auf, die im eingeklappten Zustand des Abstützfußes das Verbindungselement aufnimmt, so dass die Oberseite der Tastatur im Bereich des Abstützfußes bei eingeklapptem Abstützfuß keine Vorsprünge oder dergleichen aufweist. Dadurch wird erreicht, dass die ursprüngliche Höhe der Tastatur infolge der Vorsehung von Abstützfüßen nicht verändert wird. Eine minimale Höhe ist besonders bei derartigen Tastaturen erwünscht, die zum Transport an anderen Geräten, beispielsweise Informationsverarbeitungsgeräten, befestigt sind.

Die Gehäuseoberseite der Tastatur kann weiterhin im Bereich des Abstützfußes eine Vertiefung aufweisen, um ein Bedienen des Abstützfußes zu erleichtern.

Bei einer bevorzugten Ausführungsform weist die Tastatur einen ersten und einen zweiten Abstützfuß auf, die derart im hinteren Seitenbereich der Tastatur angeordnet sind, dass der erste Abstützfuß um die linke, der zweite Abstützfuß um die rechte Seite der Tastatur rotiert werden kann, so dass die Hinterseite der Tastatur bei ausgeklappten Abstützfüßen angehoben ist.

Weitere vorteilhafte Ausführungsformen ergeben sich aus den Unteransprüchen. Im Nachfolgenden wird nunmehr ein Ausführungsbeispiel einer erfindungsgemäßen Tastatur mit Bezug auf die beigefügten Zeichnungen detaillierter beschrieben. Es zeigen:
- Figur 1: eine Draufsicht auf eine erfindungsgemäße Tastatur,
- Figur 2: einen vergrößerten Ausschnitt entlang des Schnitts E-E von Figur 1, wobei in den Figuren 2a bis 2c das Abstützelement in verschiedenen Klappphasen dargestellt ist;
- Figur 3: einen vergrößerten Ausschnitt entlang des Schnitts K-K von Figur 1, wobei in den Figuren 3a bis 3c das Abstützelement in den Klappphasen dargestellt ist, die den Figuren 2a bis 2c entsprechen;
- Figur 4: ein Verwendungsbeispiel einer erfindungsgemäßen Tastatur in Verbindung mit einem Informationsverarbeitungsgerät im Arbeitsmodus; und
- Figur 5: die Konstellation von Figur 5, wobei sich nunmehr die Tastatur im Transportmodus befindet.

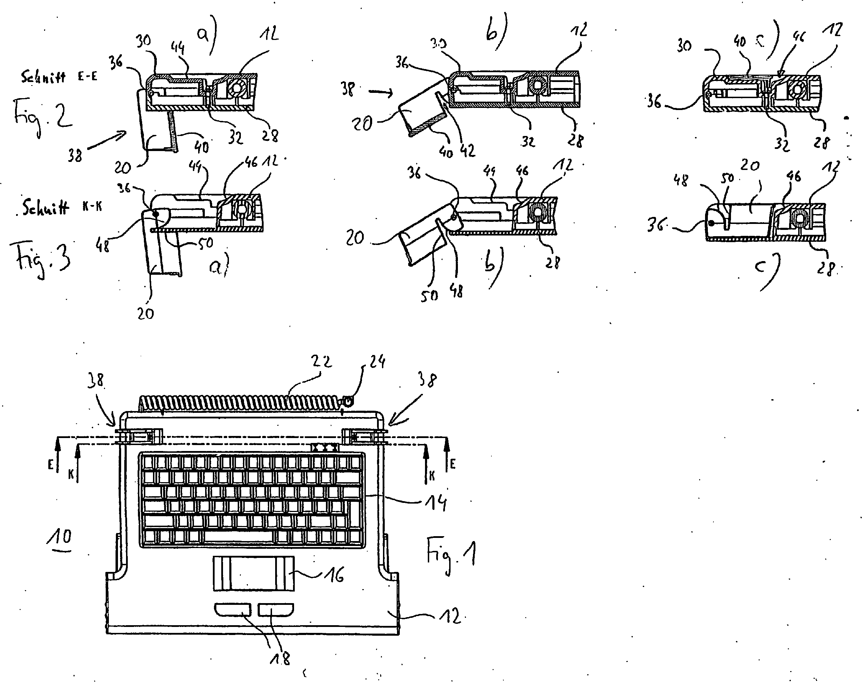

Figur 1 zeigt eine Draufsicht auf eine erfindungsgemäße Tastatur 10 mit einer Oberseite 12, in der ein Tastenfeld 14, einem Touch Pad 16 sowie dem Touch Pad zugeordnete Bestätigungstasten 18. Zu erkennen sind weiterhin ein an der linken Seite und an der rechten Seite vorgesehener Abstützfuß 38. Ein Spiralkabel 22 mit einem Anschluss 24 dient zum Anschluss der Tastatur an ein Informationsverarbeitungsgerät, beispielsweise einen Computer oder einen Protokolltester.

Die Figuren 2a bis 2c zeigen eine vergrößerte Darstellung des linken Abstützfußes 38 entlang des Schnitts E-E von Figur 1. Die Tastatur umfasst eine Oberseite 12 und eine Unterseite 28. Überdies ist ein zusätzlicher Gehäuseteil 30 vorgesehen, der mittels einer Schraube 32 an der Tastatur befestigt ist. Zur Bildung eines Abstützfußes 38 sind jeweils zwei Abstützvorrichtungen 20 über ein Verbindungselement 40 miteinander verbunden. Jede Abstützvorrichtung 20 ist über ein Drehgelenk mit einer Drehachse 36 schwenkbar mit der Tastatur 10 verbunden. Figur 2b lässt eine schlitzförmige Aussparung 42 erkennen, in der die Unterseite 28 der Tastatur bei ausgeklapptem Abstützfuß 38 geklemmt wird, siehe hierzu auch Figur 3a. Figur 2c lässt erkennen, dass das Gehäuseteil 30 eine Vertiefung 44 aufweist, in der das Verbindungselement 40 im Transportmodus, das heißt bei eingeklapptem Abstützfuß 38, aufgenommen wird. Kein Element des Abstützfußes 38 steht im eingeklappten Zustand über die Oberfläche der Tastatur 10 vor. Die Oberseite 12 der Tastatur 10 weist eine Vertiefung 46 auf, die ein Bedienen, das heißt ein Aufklappen, des Abstützfußes 38 erleichtert. Das Verbindungselement 40 dient als Griff zum Aufklappen eines Abstützfußes 38. Es fällt auf, dass der Abstützfuß 38 zwischen eingeklapptem und ausgeklapptem Zustand eine Rotation von mehr als 270 Grad durchmacht und im ausgeklappten Zustand infolge der Winkelstellung des Abstützfußes 38 relativ zur Tastatur 10 eine Selbstsperrung eintritt.

Die Figuren 3a bis 3c, die einen vergrößerten Ausschnitt entlang des Schnitts K-K von Figur 1 zeigen, wobei in den Figuren 3a bis 3c das Abstützelement in den Klappphasen dargestellt ist, die den Figuren 2a bis 2c entsprechen, lassen erkennen, dass die Kontur einer Abstützvorrichtung 20 einen bogenförmigen Bereich 48 und einen geradlinigen Bereich 50 aufweist. An dem geradlinigen Bereich 50 stützt sich die Tastaturunterseite 28 im aufgeklappten Zustand der Abstützvorrichtung 20 ab. Der bogenförmige Bereich 48, wie dies Figur 3b sehr gut erkennen lässt, gleitet beim Auf- und Einklappen der Abstützvorrichtung 20 über die Unterseite 28 der Tastatur hinweg. Wie aus Figur 3 zu entnehmen ist, steht kein Teil der eingeklappten Abstützvorrichtung 20 über die linke Seite der Tastatur 10 hinaus.

Figur 4 zeigt eine erfindungsgemäße Tastatur in perspektivischer Ansicht im zusammen mit einem Informationsverarbeitungsgerät 52 im Arbeitsmodus, wobei das Informationsverarbeitungsgerät 52 eine Tastaturhalterung 54 aufweist, in die die Tastatur 10 von oben eingeschoben werden kann und durch einen in der seitlichen Führung vorgesehenen Schnappmechanismus 56 gehalten wird. Im Transport verdeckt und schützt die Tastatur 10 ein Display 58.

Figur 5 zeigt die Tastatur 10 und das Informationsverarbeitungsgerät 52 im Transportmodus, wobei an der Unterseite der Tastatur 10 ein Griff 60 zu erkennen ist, der dazu dient, die Tastatur 10 vom Arbeitsmodus in den Transportmodus und umgekehrt zu führen.

## Patentansprüche

1. Tastatur mit mindestens einer Abstützvorrichtung (20), wobei die Abstützvorrichtung (20) mit dem Gehäuse der Tastatur (10) verbunden ist, wobei das Gehäuse der Tastatur (10) eine Ober- (12) und eine Unterseite (28) aufweist,
**dadurch gekennzeichnet, dass** die Oberseite des Tastatur-gehäuses eine Vertiefung aufweist, in der die Abstützvorrichtung in einem eingeklappten Zustand aufgenommen werden kann, und
dass die Abstützvorrichtung (20) so ausgebildet und angeordnet ist, dass sie aus dem eingeklappten Zustand in dem sie nicht über die Oberseite (12) der Tastatur hervorsteht, nach oben aus der Tastatur herausgeklappt werden kann und nach Rotation um einen vorgebbaren Winkel in einer Endstellung fixierbar ist, um die Tastatur (10) zu stützen.

2. Tastatur nach Anspruch 1,
**dadurch gekennzeichnet,**
**dass** die Abstützvorrichtung (20) derart mit Bezug auf die Tastatur (10) angeordnet ist, dass sie um die Hinterseite und/oder die linke und/oder rechte Seite der Tastatur (10) rotiert werden kann.

3. Tastatur nach Anspruch 1 oder 2,
**dadurch gekennzeichnet,**
**dass** die Abstützvorrichtung (20) eine Aussparung (42) aufweist, die derart ausgebildet ist, dass sie im aufgeklappten Zustand der Abstützvorrichtung (20) den Teil der Unterseite (28) der Tastatur (10) aufnehmen kann, an dem sich die Abstützvorrichtung (20) abstützt.

4. Tastatur nach Anspruch 3,
**dadurch gekennzeichnet,**
**dass** die Kontur der Aussparung (42) einen bogenförmigen Bereich (48) aufweist.

5. Tastatur nach Anspruch 3 oder 4,
**dadurch gekennzeichnet,**
**dass** die Kontur der Aussparung (42) einen geradlinigen Bereich (50) aufweist, an dem sich die Abstützvorrichtung (20) im aufgeklappten Zustand an der Unterseite (28) der Tastatur (10) abstützt.

6. Tastatur nach einem der Ansprüche 3 bis 5,
**dadurch gekennzeichnet,**
**dass** die Kontur der Aussparung (42) einen Bereich aufweist, der schlitzförmig im Wesentlichen in Materialstärke der Unterseite (28) der Tastatur (10) ausgebildet ist, um den Bereich der Unterseite (28) der Tastatur (10) zu klemmen, an dem sich die Abstützvorrichtung (20) im aufgeklappten Zustand abstützt.

7. Tastatur nach einem der vorhergehenden Ansprüche,
**dadurch gekennzeichnet,**
**dass** die Abstützvorrichtung (20) derart angeordnet ist, dass sie um mehr als 270 Grad rotiert werden kann, so dass eine Selbstsperrung erzielbar ist.

8. Tastatur nach einem der vorhergehenden Ansprüche,
**dadurch gekennzeichnet,**
**dass** die Abstützvorrichtung (20) derart ausgebildet und schwenkbar gelagert ist, dass sie im eingeklappten Zustand der Abstützvorrichtung (20) nicht über die Seite hinausragt, um die sie rotiert wird.

9. Tastatur nach einem der vorhergehenden Ansprüche,
**dadurch gekennzeichnet,**
**dass** mindestens zwei Abstützvorrichtungen (20) zur Bildung eines Abstützfußes (38) über ein Verbindungselement (40) zusammengefasst sind.

10. Tastatur nach Anspruch 9,
**dadurch gekennzeichnet,**
**dass** das Verbindungselement (40) so ausgebildet ist, dass es im eingeklappten Zustand des Abstützfußes (38) als Ausklappgriff für den Abstützfuß (38) verwendbar ist.

11. Tastatur nach Anspruch 9 oder 10,
**dadurch gekennzeichnet,**
**dass** der zwischen den beiden Abstützvorrichtungen (20) eines Abstützfußes (38) im eingeklappten Zustand befindliche Teil der Gehäuseoberseite (12) der Tastatur als separates Gehäuseelement (30) ausgeführt ist.

12. Tastatur nach Anspruch 11,
**dadurch gekennzeichnet,**
**dass** das separate Gehäuseelement (30) eine Vertiefung (44) aufweist, die im eingeklappten Zustand des Abstützfußes (38) das Verbindungselement (40) aufnimmt, so dass die Oberseite (12) der Tastatur (10) im Bereich des Abstützfußes (38) bei eingeklapptem Abstützfuß (38) keine Vorsprünge aufweist.

13. Tastatur nach einem der Ansprüche 9 bis 12,
**dadurch gekennzeichnet,**
**dass** die Gehäuseoberseite (12) der Tastatur (10) im Bereich des Abstützfußes (38) eine Vertiefung (46) aufweist, um ein Bedienen des Abstützfußes (38) zu erleichtem.

14. Tastatur nach einem der Ansprüche 9 bis 13,
**dadurch gekennzeichnet,**
**dass** die Tastatur einen ersten und einen zweiten Abstützfuß (38) aufweist, die derart im hinteren Seitenbereich der Tastatur angeordnet sind, dass der erste Abstützfuß (38) um die linke, der zweite Abstützfuß (38) um die rechte Seite der Tastatur (10) rotiert werden kann, so dass die Hinterseite der Tastatur (10) bei ausgeklappten Abstützfüßen angehoben ist.

## Claims

1. Keyboard with at least one supporting device (20), the supporting device (20) being connected to the housing of the keyboard (10), wherein the housing of the keyboard (10) has a top (12) and a bottom (28),
**characterized in that**
the top of the keyboard housing has a recess in which the supporting device can be received in the folded state, and
the supporting device (20) is formed and disposed such that it can be unfolded upward from the keyboard from the folded state in which it does not project beyond the top (12) of the keyboard, and is fixable in an end position after rotation about a pre-settable angle, in order to support the keyboard (10).

2. Keyboard according to claim 1,
**characterized in that**
the supporting device (20) is disposed with respect to the keyboard (10) such that it can be rotated about the back and/or left and/or right side of the keyboard (10).

3. Keyboard according to claim 1 or 2,
**characterized in that**
the supporting device (20) has a recess (42) formed such that in unfolded state of the supporting device (20), it can receive the portion of the bottom (28) of the keyboard (10) at which the supporting device (20) supports.

4. Keyboard according to claim 3,
**characterized in that**
the contour of the recess (42) has a curved region (48).

5. Keyboard according to claim 3 or 4,
**characterized in that**
the contour of the recess (42) has a linear region (50), at which the supporting device (20) supports in the unfolded state at the bottom (28) of the keyboard (10).

6. Keyboard according to any one of the claims 3 to 5,
**characterized in that**
the contour of the recess (42) has a region formed slit-shaped substantially in material thickness of the bottom (28) of the keyboard (10), in order to clamp the region of the bottom (28) of the keyboard (10), at which the supporting device (20) supports in the unfolded state.

7. Keyboard according to any one of the preceding claims,
**characterized in that**
the supporting device (20) is disposed such that it can be rotated about more than 270 degrees, such that self-locking is achievable.

8. Keyboard according to any one of the preceding claims,
**characterized in that**
the supporting device (20) is formed and pivoted such that, in the folded state of the supporting device (20), it does not protrude beyond the side, about which it is rotated.

9. Keyboard according to any one of the preceding claims,
**characterized in that**
at least two supporting devices (20) are combined through a connecting member (40) for forming a supporting foot (38).

10. Keyboard according to claim 9,
**characterized in that**
the connecting member (40) is formed such that it is usable as an unfolding grip for the supporting foot (38) in the folded state of the supporting foot (38).

11. Keyboard according to claim 9 or 10,
**characterized in that**
the portion of the housing top (12) of the keyboard located between the two supporting devices (20) of a supporting foot (38) in the folded state is designed as a separate housing element (30).

12. Keyboard according to claim 11,
**characterized in that**
the separate housing element (30) has a depression (44) receiving the connecting member (40) in the folded state of the supporting foot (38), so that the top (12) of the keyboard (10) has no protrusions or the like in the region of the supporting foot (38) with folded supporting foot (38).

13. Keyboard according to any one of the claims 9 to 12,
**characterized in that**
the housing top (12) of the keyboard (10) has a depression (46) in the region of the supporting foot (38) for facilitating manipulation of the supporting foot (38).

14. Keyboard according to any one of the claims 9 to 13,
**characterized in that**
the keyboard has first and second supporting feet (38) disposed in the rear lateral region of the keyboard such that the first supporting foot (38) can be rotated about the left, the second supporting foot (38) about the right side of the keyboard (10), so that the backside of the keyboard (10) is raised in case of unfolded supporting feet.

## Revendications

1. Clavier, comportant au moins un dispositif d'appui (20), le dispositif d'appui (20) étant relié au boîtier du clavier (10), le boîtier du clavier (10) présentant un côté supérieur (12) et inférieur (28),
**caractérisé en ce que**
le côté supérieur de boîtier du clavier présente un évidement pouvant recevoir le dispositif d'appui en l'état replié et que le dispositif d'appui (20) est constitué et disposé de façon à ce qu'il puisse être déplié vers le haut du clavier, hors de l'état replié dans lequel il ne dépasse pas du côté supérieur (12) du clavier, et, après rotation d'un angle prédéfinissable, fixé en une position finale de façon à supporter le clavier (10).

2. Clavier selon la revendication 1,
**caractérisé en ce que**
le dispositif d'appui (20) est disposé de manière telle par rapport au clavier (10) qu'il peut pivoter autour du côté arrière et/ou du côté gauche et/ou du côté droit du clavier (10).

3. Clavier selon la revendication 1 ou 2,
**caractérisé en ce que**
le dispositif d'appui (20) présente une échancrure (42) réalisée de manière telle qu'en l'état déplié du dispositif d'appui (20) elle puisse recevoir la partie du côté inférieur (28) du clavier (10) sur laquelle s'appuie le dispositif d'appui (20).

4. Clavier selon la revendication 3,
**caractérisé en ce que**
le contour de l'échancrure (42) présente une zone en forme d'arc (48).

5. Clavier selon la revendication 3 ou 4,
**caractérisé en ce que**
le contour de l'échancrure (42) présente une zone rectiligne (50) contre laquelle s'appuie le dispositif d'appui (20) en l'état déplié au côté inférieur (28) du clavier (10).

6. Clavier selon l'une quelconque des revendications 3 à 5,
**caractérisé en ce que**
le contour de l'échancrure (42) présente une zone constituée en fente pour l'essentiel dans la force du matériau du côté inférieur (28) du clavier (10), pour pincer la zone du côté inférieur (28) du clavier (10) contre laquelle s'appuie le dispositif d'appui (20) en l'état déplié.

7. Clavier selon l'une quelconque des revendications précédentes,
**caractérisé en ce que**
le dispositif d'appui (20) est disposé de manière telle qu'il puisse pivoter de plus de 270 degrés, ce qui autorise un autoblocage.

8. Clavier selon l'une quelconque des revendications précédentes,
**caractérisé en ce que**
le dispositif d'appui (20) est constitué et logé de façon pivotante de manière telle qu'en l'état replié du dispositif d'appui (20) il ne dépasse pas du côté autour duquel on le fait pivoter.

9. Clavier selon l'une quelconque des revendications précédentes,
**caractérisé en ce que**
au moins deux dispositifs d'appui (20) sont réunis par un élément de liaison (40) pour former un pied d'appui (38).

10. Clavier selon la revendication 9,
**caractérisé en ce que**
l'élément de liaison (40) est constitué de manière telle qu'en l'état replié du pied d'appui (38) il puisse être utilisé en tant que prise pour déplier le pied d'appui (38).

11. Clavier selon la revendication 9 ou 10,
**caractérisé en ce que**
la partie du côté supérieur de boîtier (12) du clavier se trouvant entre les deux dispositifs d'appui (20) d'un pied d'appui (38) en l'état replié est réalisée en tant qu'élément séparé de boîtier (30).

12. Clavier selon la revendication 11,
**caractérisé en ce que**
l'élément séparé de boîtier (30) présente un évidement (44) qui, en l'état replié du pied d'appui (38), reçoit l'élément de liaison (40), si bien que le côté supérieur (12) du clavier (10) ne présente pas de saillie dans la zone du pied d'appui (38), le pied d'appui (38) étant replié.

13. Clavier selon l'une quelconque des revendications 9 à 12,
**caractérisé en ce que**
le côté supérieur de boîtier (12) du clavier (10) présente un évidement (46) dans la zone du pied d'appui (38) pour faciliter la manipulation du pied d'appui (38).

14. Clavier selon l'une quelconque des revendications 9 à 13,
**caractérisé en ce que**
le clavier présente un premier et un deuxième pied d'appui (38) disposés de manière telle dans la zone du côté arrière du clavier qu'il est possible de faire pivoter le premier pied d'appui (38) autour du côté gauche du clavier (10) et le deuxième pied d'appui (38) autour du côté droit, si bien que le côté arrière du clavier (10) peut être soulevé, pieds d'appui dépliés.
